# EUROPEAN PATENT SPECIFICATION

(11) **EP 0 631 337 B1**
(45) Date of publication and mention of the grant of the patent: **12.07.2000**
(21) Application number: 94201727.8
(22) Date of filing: 17.06.1994
(51) Int. Cl.: H01M 8/10, C25B 13/08

(54) **Electrochemical cell comprising solid polymer electrolyte composition.**
Elektrochemische Zelle die eine polymere Feststoff-Elektrolytzusammensetzung enthält.
Cellule électrochimique comprenant une composition d'électrolyte solide à base de polymères.

(30) Priority: 18.06.1993 JP 17268393; 31.03.1994 JP 8580594
(43) Date of publication of application: 28.12.1994
(73) Proprietor: Tanaka Kikinzoku Kogyo K.K., Chuo-ku Tokyo (JP); Watanabe, Masahiro, Kofu-shi, Yamanashi 400-0001 (JP)
(72) Inventor: Watanabe, Masahiro, Kofu-shi, Yamanashi (JP); Uchida, Hiroyuki, Kofu-shi, Yamanashi (JP)
(74) Representative: Pellegri, Alberto

(56) References cited:
- EP-A- 0 069 516
- EP-A- 0 589 535
- WO-A-86/06879
- AT-B- 389 020
- FR-A- 1 462 920
- FR-A- 2 624 885
- US-A- 4 339 314
- US-A- 4 720 334
- US-A- 4 959 132
- ENERGY THE INTERNATIONAL JOURNAL, no.1/2, 1986 pages 137 - 152 'SOLID POLYMER ELECTROLYTE FUEL CELLS (SPFEC)'

## Description

### Background of the Invention

This invention relates to electrochemical cells comprising an ion exchange resin membrane with juxtaposed electrodes and a solid polymer electrolyte composition excellent in ionic conductivity and the effect of depressing crossover.

As conventional solid polymer electrolyte, such cation exchange resin as perfluorocarbon sulphonic acid, polysulphone, perfluorocarboxylic acid, styrene-vinyl benzene sulphonic acid and such anion exchange resin as styrene-butadiene based resin are known. Especially, the perfluorocarbon sulphonic acid is fluorinated resin developed by Du Pont which is known as Nafion (tradename). The Nafion which may function as solid polymer electrolyte is attracting attention because of its excellent chemical stability and thermal stability. The Nafion is basically a copolymer of tetrafluoroethylene and perfluorovinylether having a sulphonic group.

Among the above solid polymer electrolytes, the granular electrolyte is packed in a column and employed for the manufacture of pure water and the like. The solid polymer electrolyte molded to a thin film is employed as an ion exchange membrane of various electrochemical cells.

The solid polymer electrolyte electrochemical cell converts chemical energy into electric energy. In case of a fuel cell, for example, such a fuel as a hydrogen gas and methanol and such an oxidant as an oxygen gas and hydrogen peroxide are supplied to an anode and a cathode, respectively, and a current produced in an electron transfer reaction on the anode or the cathode flows in the solid polymer electrolyte membrane (ion exchange membrane). The flow of the current is produced by the movement of a cation from the anode to the cathode and of a cation from the cathode to the anode. The movement of the ions is said to occur by the presence of water in a three-dimensional network layer formed by the ion exchange groups. If, however, the solid polymer electrolyte membrane is dried, the electric resistance of the membrane, in other words, the specific resistance is increased to remarkably lower the ionic conductivity. Since, accordingly, the specific resistance becomes small with the wetting of the membrane, the lowering of the specific resistance decreases the energy loss when a current flows in the solid polymer electrolyte membrane to provide a solid polymer electrolyte fuel cell with high performance. The solid polymer electrolyte membrane sufficiently humidified can prevent the leakage of a hydrogen gas supplied to the anode and an oxygen gas supplied to the cathode passing through the solid polymer electrolyte membrane as they are, in other words, can prevent the crossover.

In order to elevate the ionic conductivity of the solid polymer electrolyte membrane by preventing the drying of the said membrane and by depressing the crossover, the humidity control for sufficiently humidifying the membrane is important.

For achieving this humidity control, an indirect method in which the membrane is indirectly humidified by a hydrogen gas supplied to the anode which has been saturated with steam, and a direct method in which the membrane is directly humidified through the hygroscopic twisted fibers being sandwiched in between the membranes have been conventionally proposed.

The document FR-A-2 624 885 discloses an ion exchange membrane to which a catalytic electrodic porous layer is formed on a surface thereof by a process that includes adsorbing a dissolved compound of a catalytic metal in the membrane, followed by a reduction process through which the catalytic metal is reduced within a superficial layer of the ion exchange membrane. The concentration of reduced catalytic metal in this superficial portion of the membrane may decrease gradually toward the interior of the membrane.

The document AT-A-389 020 discloses a fuel cell equipped with an ion exchange membrane containing porous hydrophilic particles or fibers dispersed therein to distribute water fed into the cell for maintaining a correct hydration of the ion exchange resin during operation.

However, the indirect method has the drawback that the performance may be lowered because the sufficient control of the steam pressure which changes following the change of the load of the electrochemical cell cannot be conducted so that the membrane is liable to be dried or the catalyst layer is excessively humidified. Since a large amount of the stream is supplied to the hydrogen gas so that the hydrogen gas is diluted and its partial pressure is decreased, the pressurized operation is required and the diffusion of the hydrogen gas in the electrode catalyst is prevented to disadvantageously lower the cell performance. As a measure of overcoming this disadvantage, it is proposed to make the membrane thickness thinner to lower the specific resistance of the membrane itself so as to decrease the amount of humidification. When, however, the membrane thickness is made thinner, the above crossover is likely to occur to disadvantageously lower its cell voltage.

Although, on the other hand, in the direct humidification method, the humidification can be achieved in the sandwich structure employing the twisted fibers which are sandwiched in between the solid polymer electrolyte membranes, the total membrane thickness is increased by the thickness of the fibers to lower the ionic conductivity so that the said approach hardly becomes a fundamental solution.

Accordingly, the conventional humidity control is accompanied with several drawbacks and is not satisfactory.

### Summary of the Invention

The present invention has been made to overcome the above drawbacks.

Accordingly, an object of the present invention is to provide an electrochemical cell with a

solid polymer electrolyte composition that improves the ionic conductivity of the electrochemical cell by decreasing the specific resistance of the polymeric ion exchange membrane.

A further object of the invention is to provide solid polymer electrolyte composition capable of substantially preventing the crossover.

The improved solid polymer electrolyte cell of the invention may be employed, for example, as a fuel cell and has excellent ion conductivity and a depressed crossover by the ability of forming water within the solid polymer electrolyte. The solid polymer electrolyte composition comprises solid polymer electrolyte selected from cation exchange resin such as perfluorocarbon sulphonic acid, polysulphone, perfluorocarboxylic acid, styrene-vinyl benzene sulphonic acid and anion exchange resin such as styrene-butadiene, and 0.01 to 15 % in weight of at least one metal catalyst selected from platinum, gold, palladium, rhodium, iridium and ruthenium based on the weight of the polymer contained in the solid polymer electrolyte. The solid polymer electrolyte composition also comprises 0.01 to 50 % in weight of particles and/or fibers of at least one metal oxide based on the weight of the polymer contained in the solid polymer electrolyte, for helping in retaining therein the water formed. The metal oxide contained in the solid polymer electrolyte includes silica (SiO₂), titania (TiO₂), alumina (Al₂O₃), zirconia (Zr₂O₃), magnesia (MgO) and stannic oxide (SnO₂), and among them the silica and the titania are desirably employed.

As a result of various investigations concerning the improvement of the solid polymer electrolyte excellent in the ionic conductivity and the crossover depressing effect, the present inventors have found that the above solid polymer electrolyte composition comprising the ion exchange resin and the metal catalyst has the ability of forming water by itself which improves the ionic conductivity by humidifying the solid polymer electrolyte and depress the crossover.

When the membrane is molded by the solid polymer electrolyte composition comprising the solid polymer electrolyte and the catalyst metal contained therein and is employed as the solid polymer electrolyte membrane (ion exchange membrane) of the solid polymer electrolyte electrochemical cell, a hydrogen gas or methanol and an oxygen gas or hydrogen peroxide react with each other in the above membrane to form water. In this manner, the solid polymer electrolyte membrane made by the composition of the present invention can humidify itself by forming water by utilizing the hydrogen gas and the oxygen gas tending to crossover. Since the humidification from the outside can be reduced or omitted in the above situation, the lowering of the cell performance due to the humidification from the outside can be depressed and the non-humidification operation can be conducted. Since such a fuel as a hydrogen gas and such an oxidant as an oxygen gas never flow to the respective counterelectrodes by the depression of the crossover, the lowering of the cell voltage can be prevented and the ionic conductivity can be improved by making the membrane thickness thinner to decrease the specific resistance of the solid polymer electrolyte membrane itself.

When 0.01 to 50 % in weight of the particles and/or the fibers of such a metal oxide as the silica and the titania based on the weight of the solid polymer electrolyte are incorporated in the solid polymer electrolyte containing the metal catalyst, the ability of retaining the water produced in the solid polymer electrolyte is elevated. Since, in this manner, the water produced is effectively retained, the drying of the membrane is depressed, the ionic conductivity is further improved and the effect of depressing the crossover is further elevated.

When the above solid polymer electrolyte composition is employed as the solid polymer electrolyte membrane (ion exchange membrane) of a solid polymer electrolyte electrochemical cell such as a fuel cell, the membrane may possess not only the ability of forming water by itself but also the ability of retaining the water so that the solid polymer electrolyte electrochemical cell having the excellent performance and the following effects can be obtained.
① Since the membrane has the abilities of forming water by itself and of retaining the water, an amount of humidity supplied from the outside may be reduced. In this manner, the lowering of the cell performance due to the supply of the large amount of the humidity can be depressed.
② Since the operation temperature can be made lower because of the reduction of the amount of the humidity from the outside, the efficiency of producing the output electricity can be increased and the period of the startup at the initial operation may be reduced.
③ If a small amount of a fuel gas or liquid and an oxidative gas or liquid are supplied to the solid polymer electrolyte membrane at the time of operation suspension, the metal catalyst of the membrane produces water which is retained in the metal oxide such as silica and titania. Since, in this manner, the solid polymer electrolyte membrane is never dried, the prompt rising of the current density at the time of initial operation can be achieved.
④ Since the solid polymer electrolyte membrane possesses the abilities of forming water by itself and of retaining the water, the operation under non-humidification can be conducted.
⑤ Since the crossover is depressed, the fuel gas or liquid and the oxidative gas or liquid do not flow to the respective counterelectrodes so that the lowering of the cell voltage can be prevented.
⑥ Since the crossover is depressed, the thickness of the membrane may be made thinner to reduce the resistance of the membrane so that the ionic conduction can be accelerated.

### Brief Description of the Drawings

Fig.1 is a perspective view showing a solid polymer electrolyte electrochemical cell which may include solid polymer electrolyte of the present invention;
Fig.2 is a sectional view of a solid polymer electrolyte electrochemical cell assembled as a single cell having a seal structure;
Fig.3 is a diagram comparing the respective resistance values among Cell A (membrane made by composition of Nafion incorporating platinum was employed), Cell B (membrane made by composition of Nafion incorporating platinum and silica was employed), Cell C (membrane made by composition of Nafion incorporating platinum and titania was employed) and Cell D (membrane made by composition of only Nafion was employed).
Fig.4 is a diagram showing comparison of current densities including IR at 650 °C of the respective Cells under humidified and non-humidified operations.
Fig.5 is a graph showing relation between current densities and operation times at humidification temperatures of 80 °C and 40 °C of the respective Cells.

### Detailed Description of the Invention

As mentioned, the content of the metal catalyst contained in the solid polymer electrolyte in a highly dispersed state is 0.01 to 15 % in weight of the weight of the solid polymer electrolyte. The average particle size of the metal catalyst is not more than 0.1 µm, and preferably not more than 0.01 µm. This is because the effect of depressing the crossover is elevated when the dispersion of the metal catalyst in the electrolyte is increased with the decrease of the average particle diameter, and further an amount of the catalyst contained may be reduced.

The particles of the metal oxide contained in the electrolyte in the highly dispersed state may have an amorphous or crystalline structure, and their average primary particle diameter is not more than 0.1 µm, and desirably not more than 0.01 µm. The metal oxide preferably possesses high purity and a high specific surface area (not less than 130 m²/g measured in accordance with the BET method). The diameter of the fibers is preferably not more than 5 µm. This is because in case of the particles having the average primary particle diameter of more than 0.1 µm and/or the fibers having the diameter of more than 5 µm, the effect of lowering the specific resistance of the solid polymer electrolyte composition is small and impractical. As mentioned, the content thereof is 0.01 to 50 % in weight based on the weight of the solid polymer electrolyte, and preferably 0.1 to 20 %. This is because the effect of improving the specific resistance is not recognized in the range of below 0.01 % in weight and over 50 % in weight.

In order to incorporate the particles and/or the fibers of such a metal oxide as silica and titania in the solid polymer electrolyte, the particles and/or the fibers of the metal oxide and the solid polymer electrolyte are desirably mixed in the respective suspended or dissolved state in a hydrophilic solvent such as methanol, ethanol, isopropanol and butanol because the specific resistance of the ion exchange membrane is made smaller. The reason thereof is supposed that the particles and/or the fibers of the incorporated oxides may be contained near the cluster structure formed by the ion exchange groups (hydrophilic) of the solid polymer electrolyte by employing the hydrophilic solvent.

Such cation exchange resin as perfluorocarbon sulphonic acid, polysulphone, perfluorocarboxylic acid, styrene-vinyl benzene sulphonic acid and such anion exchange resin as styrene-butadiene based resin may be employed as the solid polymer electrolyte incorporating the particles and/or the fibers of the metal catalyst and the metal oxide. Especially, the perfluorocarbon sulfonic acid (Nafion) is suitable because it has superior chemical resistance and thermal stability.

Then, examples of the manufacture of the solid polymer electrolyte composition of the present invention and of the manufacture of a membrane when the composition of the present invention is employed as a solid polymer electrolyte membrane (ion exchange membrane) of a solid polymer electrolyte electrochemical cell will be described.

### (A) In case that only metal catalyst is incorporated. (Comparison)

After the above 5 % in weight isopropanol solution of the solid polymer electrolyte is flown into a membrane molding vessel and dried at an ordinary temperature, it is vacuum dried at 60 °C for removing the isopropanol so that the membrane is molded. After the solid polymer electrolyte is dipped in distilled water containing a platinum-ammine complex of which an amount is 20 times a theoretical amount assuming that two moles of the ion exchange group in the solid polymer electrolyte are replaced with one mole of the platinum complex followed by agitation at 60 °C for five hours, the platinum complex replaces the ion exchange group and is adsorbed on the solid polymer electrolyte. After the membrane is washed with distilled water for over four hours, it is dipped in distilled water containing 20 times equivalence of hydrazine followed by agitation at 60 °C for five hours to deposit the platinum particles on the solid polymer electrolyte. Then, after the ion exchange group is protonized by means of treatment with 4 molar concentration hydrochloric acid, the membrane is sufficiently washed and dried.

In this manner, the solid polymer electrolyte membrane comprising the solid polymer electrolyte and the metal catalyst highly dispersed therein can be prepared.

### (B) In case that metal catalyst and metal oxide are incorporated.

At first, the above 5 % in weight isopropanol solution of the solid polymer electrolyte and isopropanol dispersion of particles and/or fibers of 0.01 to 50 % in weight of a metal oxide [for example, silica having an average primary particle size of 0.007 µm sold by Nippon Aerosil K.K.(tradename: Aerosil 380) and titania having an average primary particle size of 0.005 µm prepared by hydrolysis of a titanium compound (chemical formula: Ti[OCH(CH₃)ₙ]) may be employed] based on the weight of the solid polymer electrolyte (concentration: 5 g/liter) are mixed and sufficiently agitated with an ultrasonic homogenizer. After this solution is flown into a membrane molding vessel and dried at an ordinary temperature, it is vacuum dried at 60 °C for removing the isopropanol so that the membrane is molded. Alternatively, the membrane may be prepared by means of extrusion molding or screen printing.

As a comparative example of the incorporation of the particles and/or the fibers in the solid polymer electrolyte, the particles and/or the fibers may be directly applied to the surface of the solid polymer electrolyte membrane already molded and then the particles and the like are embedded in the surface layer by means of treatment at a high temperature and a high pressure such as hotpressing. In this case, the content of the particles and/or the fibers in the surface layer of the solid polymer electrolyte membrane is controlled to be 0.01 to 50 % in weight.

Then, a method of incorporating platinum particles as the metal catalyst in the solid polymer electrolyte membrane containing the metal oxide thus prepared will be described.

After the solid polymer electrolyte membrane containing the metal oxide is dipped in distilled water containing a platinum-ammine complex of which an amount is 20 times a theoretical amount assuming that two moles of the ion exchange group in the solid polymer electrolyte are replaced with one mole of the platinum complex followed by agitation at 60 °C for five hours, the platinum complex replaces the ion exchange group and is adsorbed on the membrane. After the membrane is washed with distilled water for over four hours, it is dipped in distilled water containing 20 times equivalence of hydrazine followed by agitation at 60 °C for five hours to deposit the platinum particles on the solid polymer electrolyte containing the metal oxide. Then, after the ion exchange group is protonized by means of treatment with 4 molar concentration hydrochloric acid, the membrane is sufficiently washed and dried.

In this manner, the solid polymer electrolyte membrane comprising the solid polymer electrolyte and the metal catalyst and the metal oxide highly dispersed therein can be prepared. Alternatively, after the metal catalyst such as platinum is supported on the metal oxide, the said metal oxide may be can be incorporated in the solid polymer electrolyte in accordance with the above procedures.

As mentioned, since the solid polymer electrolyte composition of the present invention possesses the abilities of forming water by itself and of retaining the water so that the ionic conductivity and the effect of depressing the crossover is excellent, the composition is useful as an ion exchange membrane for such an electrochemical cell as an oxygen sensor employing an ion exchange membrane, a water electrolyzing cell and an apparatus for synthesizing acetaldehyde employing an ion exchange membrane in addition as the solid polymer electrolyte fuel cell. When the composition is employed as the solid polymer electrolyte layer of the electrochemical cell comprising an anode, the solid polymer electrolyte layer and a cathode, the composition is preferably molded to a thin membrane layer having a thickness of 0.03 to 2 mm, more preferably 0.05 to 0.1 mm.

### Examples

### Example 1

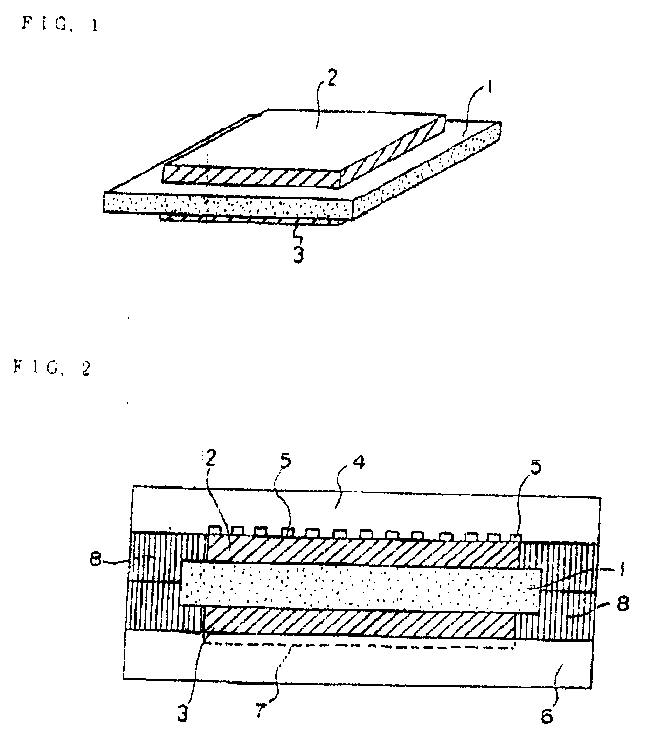

In order to investigate the effect of the incorporation of a catalyst metal, silica and titania in solid polymer electrolyte composition, a solid polymer electrolyte fuel cell was prepared by employing the membrane made by the composition of the present invention as a solid polymer electrolyte membrane and a performance test was conducted under a humidified condition and a non-humidified condition. Figs.1 and 2 show the structure of the solid polymer electrolyte fuel cell prepared, and 1 denotes a solid polymer electrolyte membrane (ion exchange membrane), 2 is a cathode catalyst layer, 3 is an anode catalyst layer, 4 is a cathode current collector having supply paths 5 of oxygen, 6 is an anode current collector having supply paths 7 of hydrogen and 8 is sealing members.

The following three membranes were individually prepared and the thickness of all the membrane was adjusted to be 60 µm. The cathode catalyst layer 2, the anode catalyst layer 3, the cathode current collector 4 having supply paths 5 of oxygen, the anode current collector 6 having supply paths 7 of hydrogen and the sealing members 8 were employed in common in the three membranes.
① Cell A (Comparison) .... The solid polymer electrolyte membrane incorporating the platinum in the Nafion which was prepared in accordance with the above method of manufacturing the membrane (A) was employed. The platinum content in this membrane was adjusted to be 5.8 % in weight based on the Nafion.
② Cell B .... The solid polymer electrolyte membrane incorporating the platinum and the silica in the Nafion which was prepared in accordance with the above method of manufacturing the membrane (B) was employed. The platinum catalyst content and the silica content in this membrane were adjusted to be 5.8 % and 5 % in weight, respectively, based on the Nafion.
③ Cell C ... The solid polymer electrolyte membrane incorporating the platinum and the titania in the Nafion which was prepared in accordance with the above method of manufacturing the membrane (B) was employed. The platinum catalyst content and the titania content in this membrane were adjusted to be 5.8 % and 5 % in weight, respectively, based on the Nafion.
④ Cell D .... The solid polymer electrolyte membrane composed of only Nafion was employed as Comparative Example.

The operation conditions of the Cells were as follows.
Reaction Gas.... hydrogen (anode), oxygen (cathode)
Cell Operation Temperature... 80 °C
Cell Operation Pressure... atmospheric pressure
Other Condition... under humidification (indirect humidification employing an anode gas previously humidified at 80 °C) or under non-humidification

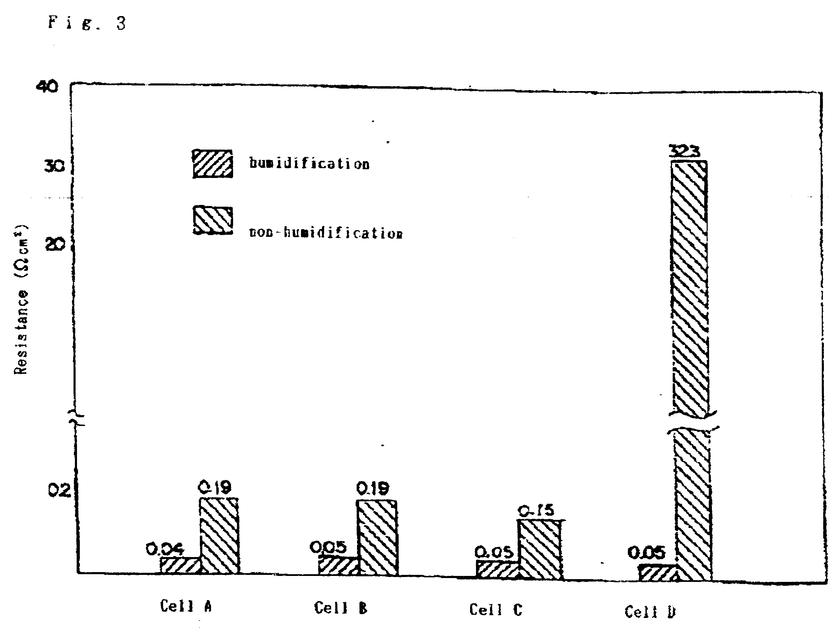

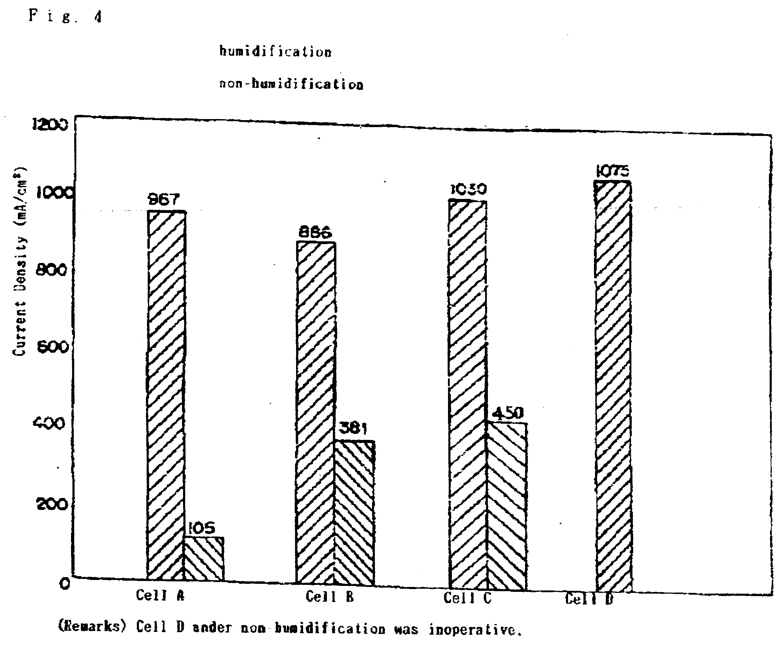

The respective resistance values of the Cells A, B, C and D were measured and the results are shown in Fig. 3. The current densities including IR at a cell voltage of 650 mV of the respective Cells under humidified and non-humidified conditions were also measured and the results are shown in Fig. 4.

It is apparent from the results shown in Fig.3 that the resistance values of the respective Cells under the humidification were nearly the same, and while the value of the Cell D in the non-humidification was 32.3 Ωcm, the other Cells in the non-humidification exhibited an apparently lower values, that is, 0.19 Ωcm for the Cells A and B and 0.15 Ωcm for the Cell C. These lower resistance values are supposed to be obtained by water forced by a crossover hydrogen gas and a crossover oxygen gas flown to the solid polymer electrolyte membrane.

It can be seen from the results of Fig.4 that under the humidified operation the sufficient performance could be obtained in Cell D.

On the other hand, under the non-humidified operation, the Cell D became inoperative with the cell voltage of -1 V after a small amount of current of 6 mA/cm² was supplied. However, the Cells A, B and C exhibited the current densities of 105 mA/cm², 381 mA/cm² and 450 mA/cm², respectively. Especially, the high current densities of the Cells B and C suggest that the water was formed by the crossover hydrogen gas and the crossover oxygen gas to the solid polymer electrolyte membrane by means of the platinum in the membrane and prevented the drying of the membrane by retaining the water by means of the silica and the titania.

The above results suggest the possibility of the non-humidified operations of the Cells A, B and C though the current densities of the Cells A, B and C under the non-humidified operation were smaller than those of the humidified operation.

### Example 2

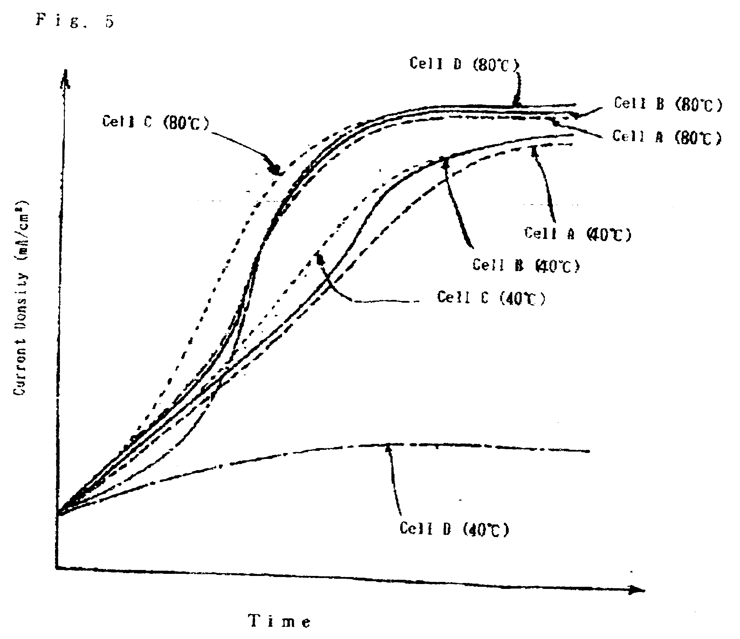

The relation between the current density and the operation time at humidification temperatures at 80 °C and 40 °C was investigated employing the respective Cells A, B, C and D prepared in Example 1, and the results are shown in Fig. 5. In advance of the investigation, the solid polymer electrolyte membrane was forcibly dried by passing a dry gas through the Cells. This drying was conducted for more apparently investigate the effect of the incorporation of the metal catalyst, or of the metal catalyst and the silica, or of the metal catalyst and the titania in the solid polymer electrolyte membrane. The operation was conducted at the same temperature as that of the humidification, and the measurement of the current density was initiated at the time of the heating of a humidification pot.

It can be seen from the results shown in Fig.5 that the Cells A, B, C and D possessed the substantially same characteristic curves under the humidification at 80 °C, however in the beginning, more prompt rising of the curves of the Cells A, B and C compared with that of the Cell D was observed. It is considered that even when the temperature of the humidification pot producing the humidification steam was low so that the humidification of the hydrogen gas was insufficient, the ionic conductivity was raised by humidifying the inside of the solid polymer electrolyte membrane for the Cells A, B and C.

On the other hand, under the humidification at 40 °C, while the Cell D could take out only a quite small amount of the current density, the Cells A, B and C could take out the current densities as substantially the same as those under the humidification at 80 °C though the rising slopes of the Cells A, B and C tended to be more gradual than those under the humidification at 80 °C.

Employing the membrane composed of the solid polymer electrolyte composition of this Example as the solid polymer electrolyte membrane of the solid polymer electrolyte fuel cell, the substantially same current density can be obtained even at a lower humidification temperature or an operation temperature so that the startup time can be reduced because the efficiency of producing the output electricity raises and heating time required to heat the humidification pot and the cell to the operation temperature can be reduced.

Although in this investigation the solid polymer electrolyte membrane was forcibly dried by passing the dry gas through the respective Cells prior to the investigation for apparently investigating the effect of incorporating the metal catalyst or the metal catalyst and the silica or the metal catalyst and the titania in the membrane, small amounts of a hydrogen gas and an oxygen gas, in the actual operation, may be flown to the membrane at the time of the suspension of the operation. Since, in this manner, water is produced by means of the metal catalyst in the membrane and the membrane is never dried even at the suspension of the operation, the more rapid rising of the current density at the initial operation can be obtained.

## Claims

1. An electrochemical cell comprising an ion exchange resin membrane separating an anode electrode from a cathode electrode juxtaposed to the membrane constituting a solid polymer electrolyte of the cell, characterized in that
particles of a water-synthesis metal catalyst selected from the group composed of platinum, gold, palladium, rhodium, iridium and ruthenium in amount of comprised between 0.01 and 15% by weight based on the weight of the resin and particles and/or fibers of at least a metal oxide selected from the group composed of silica, titania, alumina, zirconia, magnesia and stannic oxide in an amount comprised between 0.01 and 50% by weight based on the weight of the resin are dispersed throughout the bulk of the solid polymer electrolyte.

2. The solid polymer electrolyte cell of claim 1, wherein the resin is a cation exchange resin belonging to the group composed of perfluorocarbon sulphonic acid, polysulphone, perfluorocarboxylic acid, styrene-vinyl benzene sulphonic acid.

3. The solid polymer electrolyte cell of claim 1, wherein the resin is a styrene-butadiene anion exchange resin.

4. The solid polymer electrolyte cell of claim 1, wherein the average particles size of the metal catalyst is equal or less than 0.1 µm.

5. The solid polymer electrolyte cell of claim 1, wherein the average particle size or average diameter of the fibers of metal oxide is equal or smaller than 6 µm.

## Patentansprüche

1. Elektrochemische Zelle, umfassend eine Membran aus einem Ionenaustauscherharz, die eine Anode von einer Kathode, die nebeneinander an der Membran liegen, trennt, die den polymeren Feststoff-Elektrolyten der Zelle bildet, dadurch gekennzeichnet, daß
Partikel eines Wasser-Synthese-Metallkatalysators, der aus der Gruppe ausgewählt wurde, die aus Platin, Gold, Palladium, Rhodium, Iridium und Ruthenium besteht, in einer Menge zwischen 0,01 und 15 Gewichtsprozent basierend auf dem Gewicht des Harzes, und Partikel und/oder Fasern wenigstens eines Metalloxids, das aus der Gruppe ausgewählt wurde, die aus Siliciumdioxid, Titandioxid, Aluminiumoxid, Zirkoniumdioxid, Magnesiumoxid und Zinndioxid besteht, in einer Menge zwischen 0,01 und 50 Gewichtsprozent basierend auf dem Gewicht des Harzes, durch die Volumen des polymeren Feststoff-Elektrolyten dispergiert werden.

2. Die polymere Feststoff-Elektrolytzelle nach Anspruch 1, dadurch gekennzeichnet daß das Harz ein Kationenaustauscherharz ist, das zu der Gruppe gehört, die aus Perfluorkohlenstoff-Sulfonsäure, Polysulphon, Perfluorcarbonsäure, Styren-Vinylbenzen-Sulphonsäure besteht.

3. Die polymere Feststoff-Elektrolytzelle nach Anspruch 1, dadurch gekennzeichnet, daß das Harz ein Styren-Butadien-Anionenaustauscherharz ist.

4. Die polymere Feststoff-Elektrolytzelle nach Anspruch 1, dadurch gekennzeichnet, daß die mittlere Partikelgröße des Metallkatalysator gleich oder weniger als 0,1 µm ist.

5. Die polymere Feststoff-Elektrolytzelle nach Anspruch 1, dadurch gekennzeichnet, daß die mittlere Partikelgröße oder der mittlere Durchmesser der Fasern des Metalloxids gleich oder Meiner als 6 µm ist.

## Revendications

1. Pile électrochimique comprenant une membrane à résine échangeuse d'ions séparant une électrode d'anode d'une électrode de cathode juxtaposées à la membrane constituant un électrolyte polymère solide de la pile, caractérisée en ce que :
des particules d'un catalyseur métallique de la synthèse de l'eau choisies dans le groupe comprenant le platine, l'or, le palladium, le rhodium, l'iridium et le ruthénium dans des quantités comprises entre 0,01 et 15 % en poids sur la base du poids de la résine et des particules et/ou des fibres d'au moins un oxyde métallique choisi dans le groupe comprenant la silice, l'oxyde de titane, l'alumine, le zircone, la magnésie et l'oxyde stannique dans une quantité comprise entre 0,01 et 50 % en poids sur la base du poids de la résine sont dispersées dans la masse de l'électrolyte polymère solide.

2. Pile à électrolyte polymère solide selon la revendication 1, dans laquelle la résine est une résine échangeuse de cations appartenant au groupe comprenant l'acide sulphonique perfluorocarboné, le polysulphone, l'acide perfluorocarboxylique, l'acide styrène-vinyl benzène sulphonique.

3. Pile à électrolyte polymère solide selon la revendication 1, dans laquelle la résine est une résine échangeuse d'anions à styrène-butadienne.

4. Pile à électrolyte polymère solide selon la revendication 1, dans laquelle la dimension moyenne des particules du catalyseur métallique est égale ou inférieure à 0,1 µm.

5. Pile à électrolyte polymère solide selon la revendication 1, dans laquelle la dimension moyenne des particules ou le diamètre moyen des fibres d'oxyde métallique est égale ou inférieure à 6 µm.
